# EUROPEAN PATENT SPECIFICATION

(11) **EP 0 967 370 B1**
(45) Date of publication and mention of the grant of the patent: **30.03.2005**
(21) Application number: 99112276.3
(22) Date of filing: 25.06.1999
(51) Int. Cl.: F02B 23/10, F02F 1/24

(54) **Internal combustion engine**
Brennkraftmaschine
Moteur à combustion interne

(30) Priority: 26.06.1998 JP 18046398; 30.06.1998 JP 18485198
(43) Date of publication of application: 29.12.1999
(73) Proprietor: YAMAHA HATSUDOKI KABUSHIKI KAISHA, Iwata-shi Shizuoka-ken (JP)
(72) Inventor: Kenji, Mori, Iwata-shi, Shizuoka-ken (JP); Naoki, Tsuchida, Iwata-shi, Shizuoka-ken (JP); Hiroyuki, Miyatake, Iwata-shi, Shizuoka-ken (JP)
(74) Representative: Grünecker, Kinkeldey, Stockmair & Schwanhäusser Anwaltssozietät

(56) References cited:
- EP-A- 0 422 275
- EP-A- 0 839 997
- DE-A- 19 728 946
- GB-A- 2 112 859
- GB-A- 2 288 210
- US-A- 4 364 342
- US-A- 4 625 682
- US-A- 4 770 138
- US-A- 5 605 125
- US-A- 5 799 638
- PATENT ABSTRACTS OF JAPAN vol. 009, no. 128 (M-384), 4 June 1985 (1985-06-04) & JP 60 011626 A (FUJI JUKOGYO KK), 21 January 1985 (1985-01-21)

## Description

The present invention is related to an Internal combustion engine of an in-cylinder injection type with at least one injector and at least one ignition plug according to the preamble of the independent claim 1.

While the in-cylinder injection engine in which fuel is injected from an injector installed in the cylinder head directly into the cylinder has the advantage of providing high output, low fuel consumption, improved exhaust gas property, etc., effective realization of the advantage premises uniform combustion of mixture in the combustion chamber.

Here, the layout of the injector and the ignition plug is considered to be one of the important factors for realizing uniform combustion of mixture in the combustion chamber of the in-cylinder injection engine.

From JP 10-08971, JP 60-011626-A and GB-A-2 288 210 a multiple-valve engine is known in which an injector and a spark plug are arranged in the bore center area of the cylinder. Here, the injector and the spark plug are surrounded by the intake and exhaust valves so that the size of the walls of the cylinder head surrounding the injector and the spark plug is large.

It is an objective of the present invention to improve an internal combustion engine as indicated above so as to increase a cooling efficiency of the injector and the spark plug arranged in the bore center area of the cylinder.

This objective is solved according to the present invention by an internal combustion engine of an in-cylinder injection type with at least one injector and at least one ignition plug, wherein the injector and/or at least one of the ignition plugs are disposed in a bore center area of a cylinder, whereas said injector and said one ignition plug are arranged side by side, and wherein the injector and the ignition plug are disposed obliquely with displacements toward intake and exhaust sides, with the injector on the intake side and the ignition plug on the exhaust side.

By such an arrangement of the injector and the spark plug, it is an advantage of the internal combustion engine that high output, low fuel consumption, improved exhaust gas property, etc. have been facilitated by realizing uniform combustion of mixture.

Further, it is advantageous when said injector or injectors are arranged such that an electrode area of said ignition plug or ignition plugs are free of a direct fuel spray.

According to an advantageous embodiment of the invention, the injector is disposed in the bore center area of each cylinder, and two ignition plugs are disposed in the camshaft direction on both sides of the injector.

According to another embodiment of the invention, the ignition plug is attached tilted toward a camshaft and relative to a cylinder axis.

Further, it is possible that the cylinder head is provided with three intake valves and two exhaust valves.

Therefore, with this invention, since the center injection type is employed in which fuel is injected from an injector toward the central area of the combustion chamber and since mixture is ignited for burning by means of two ignition plugs disposed in the camshaft direction, mixture is uniformly burned in the combustion chamber, with a high output, a low fuel consumption, and improved exhaust gas property.

The center injection type also provides the advantage of reduction in the amount of fuel adhering to the wall of cylinder and resultant small amount of HC emission. This means an additional improvement in the exhaust gas property.

In addition, it is advantageous when the injector and the ignition plug are disposed side by side in the central area of each cylinder, and the electrode portion of the ignition plug is located at a higher position on the upper wall of the combustion chamber than the fuel injection spout of the injector.

According to another embodiment of the invention, the injector and the ignition plug are disposed side by side generally at right angles to a camshaft and that at least one of the valve driving mechanisms for the intake and the exhaust valves respectively is made of a rocker arm type.

Further, it is possible that each cylinder head is provided with three intake valves and two exhaust valves.

According to a further embodiment of the invention, at least one of the intake valves is made smaller in diameter than other intake valves depending on the direction of the side by side disposition of the injector and the ignition plug.

According to a still further embodiment of the invention, the top land of the piston is made flat or convex.

Thus, this invention employs the center injection type in which the fuel is injected from the injector toward the central part of the combustion chamber, and the electrode portion of the ignition plug is located at a higher position on the upper wall of the combustion chamber than the fuel injection spout of the injector. Therefore, atomized fuel which is injected from the injector is not directly sprayed over the electrode portion of the ignition plug. This enables reliable, uniform combustion of mixture by means of the ignition plug, as well as high output, low fuel consumption, and improved exhaust gas property.

The center injection type also provides the advantage of reduction in the amount of fuel adhering to the cylinder wall and resultant small amount of HC emission. This means an additional improvement in the exhaust gas property.

Other preferred embodiments of the present invention are laid down in further dependent claims.

In the following, the present invention is explained in greater detail with respect to several embodiments thereof in conjunction with the accompanying drawings, wherein:
FIG. 1 is a vertical cross-sectional view of an essential part of an in-cylinder injection type of engine associated with this invention;
FIG. 2 is a vertical cross-sectional view of an essential part of an in-cylinder injection type of engine associated with this invention;
FIG. 3 is a vertical cross-sectional view of a cylinder head of an in-cylinder injection type of engine associated with this invention;
FIG. 4 is a bottom view of the cylinder head of an in-cylinder injection type of engine associated with this invention;
FIG. 5 is a partial cross-sectional view, showing a combustion chamber with a squish area of an in-cylinder injection type of engine associated with this invention;
FIG. 6 shows the timing of fuel injection and ignition of an in-cylinder injection type of engine associated with this invention;
FIG. 7 is a vertical cross-sectional view of the cylinder head of an in-cylinder injection engine not falling under the scope of the present invention;
FIG. 8 is a vertical cross-sectional view of the cylinder head of an in-cylinder injection engine as shown in FIG. 7;
FIG. 9 is a bottom view of the cylinder head of an in-cylinder injection engine as shown in FIG. 7;
FIG. 10 is a vertical cross-sectional view of the cylinder head of an in-cylinder injection engine not falling under the scope of the present invention;
FIG. 11 is a vertical cross-sectional view of the cylinder head of an in-cylinder injection engine as shown in FIG. 10;
FIG. 12 is a bottom view of the cylinder head of an in-cylinder injection engine as shown in FIG. 10;
FIG. 13 is a bottom view of the cylinder head of an in-cylinder injection engine not falling under the scope of the pesent invention;
FIG. 14 is a vertical cross-sectional view of the cylinder head of an in-cylinder injection engine associated with this invention;
FIG. 15 is a bottom view of the cylinder head of an in-cylinder injection engine as shown in FIG. 14.

Embodiments of the invention will be hereinafter described in reference to the appended drawings.

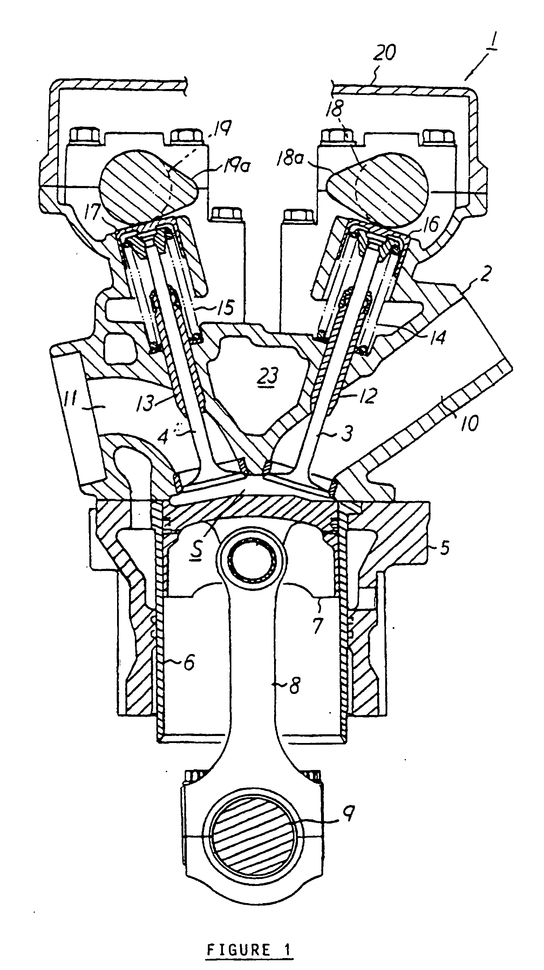

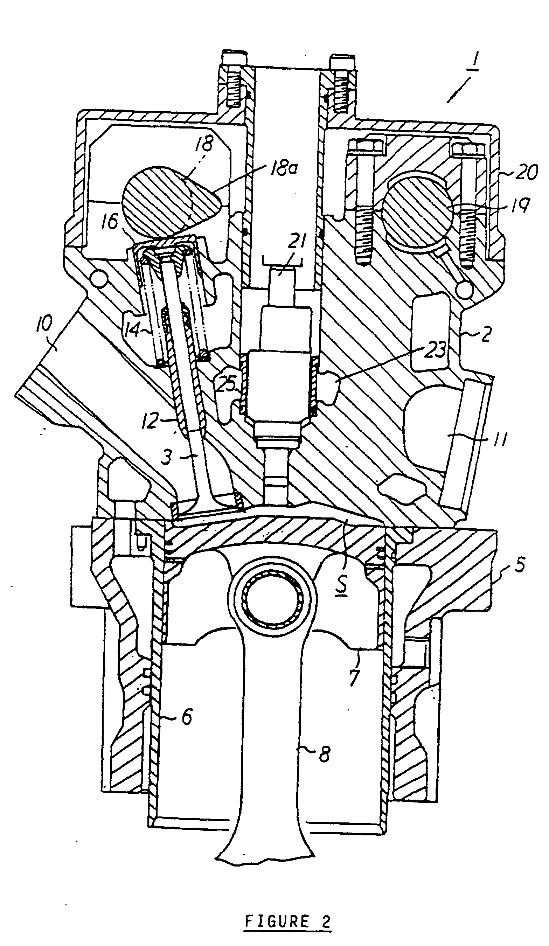

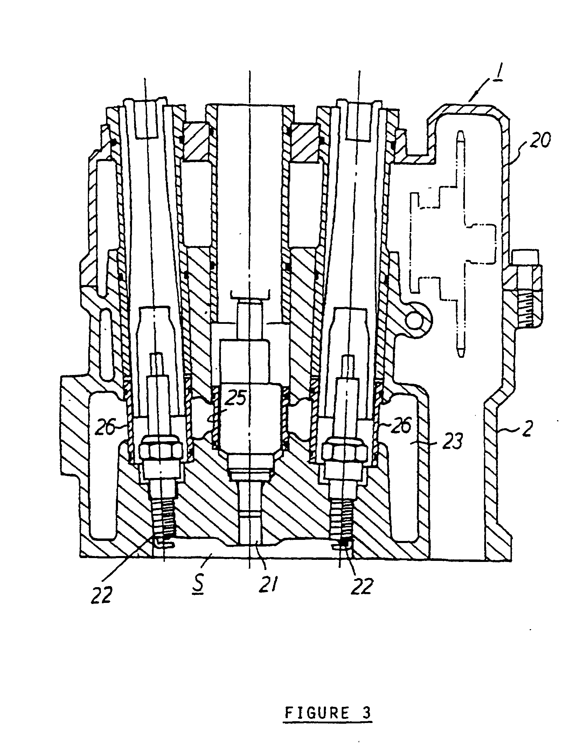

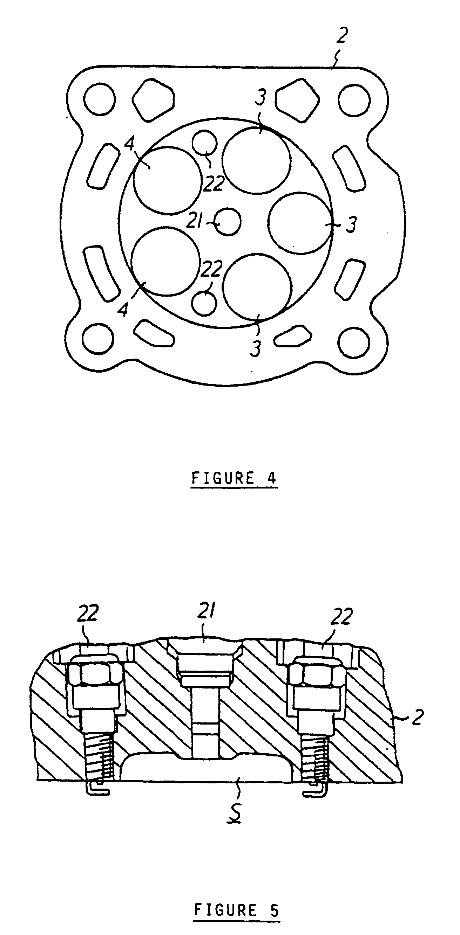

FIGs. 1 and 2 show a vertical cross-sectional view of an essential part of the in-cylinder injection engine of the invention. FIG. 3 is a vertical cross-sectional view of the cylinder head of the in-cylinder injection engine. FIG. 4 is a bottom view of the same cylinder head.

The in-cylinder injection engine of this embodiment is of the four-stroke cycle type with five valves, and its cylinder head 2 as shown in FIG. 4 has three intake valves 3 and two exhaust valves 4.

As shown in FIGs. 1 and 2, the cylinder head 2 is placed over a cylinder block 5. A piston 7 for free up and down sliding is inserted in a cylinder 6 mounted in the cylinder block 5 and coupled through a connecting rod 8 to a crankshaft 9.

Intake passages 10 and exhaust passages 11 are formed in the cylinder head 2. The ends of the intake passages 10 and exhaust passages 11 opening into a combustion chamber S, namely intake ports and exhaust ports, are opened and closed by means of the intake and exhaust valves 3 and 4 with appropriate timing to perform necessary gas replacements in the combustion chamber S.

That is, the intake valves 3 and the exhaust valves 4 are inserted in and supported with respective valve guides 12 and 13 press-fitted into the cylinder head 2; urged toward closing position by means of valve springs 14 and 15; and contacted through valve lifters 16 and 17 with an intake cam 18a and an exhaust cam 19a.

The intake cam 18a and the exhaust cam 19a are respectively formed integrally with an intake camshaft 18 and an exhaust camshaft 19. As the intake camshaft 18 and the exhaust camshaft 19 are driven to rotate by part of the engine power, the intake valves 3 and the exhaust valves 4 are opened and closed with appropriate timing to perform necessary gas replacements in the combustion chamber S as described above.

A head cover 20 is placed over the cylinder head 2. An injector 21 is disposed in the bore center area (cylinder bore axis area of the cylinder block 5) of the cylinder head 2. Two ignition plugs 22 are disposed in the cylinder head 2 on both sides of the injector 21 in the camshaft direction (right-left direction in FIG. 3). As shown in FIG. 4, the two ignition plugs 22 are radially disposed with displacement from the injector 21 toward the exhaust side. In FIG. 3, the ignition plugs 22 are seen with a slight tilt from the cylinder axis toward the camshafts so that the distance between them is slightly widening upward.

As shown in FIG. 3, the injector 21 and the ignition plug 22 are respectively sheathed in pipe members 25 and 26 and disposed to face a water jacket 23.

In the above-described arrangement of the in-cylinder injection type of engine 1, fuel is injected from the injector 21 with appropriate timing toward the central area of the combustion chamber S and mixed with fresh air in the cylinder 6 to form mixture of a specified air-to-fuel ratio in the cylinder 6. The mixture is compressed in the cylinder 6 with the piston 7, ignited with the two ignition plug 22, and burned. Part of the heat produced as the mixture is burned is converted to mechanical power. Exhaust gas produced at the same time is discharged to exhaust passages 11 as the exhaust valves 4 open in the exhaust stroke.

As described above, the in-cylinder injection engine 1 of this embodiment employs the so-called center injection type in which fuel is injected from the injector 21 to the central part of the combustion chamber S, and mixture is ignited and burned by means of the two ignition plugs 22 disposed in the camshaft direction. This enables reliable, uniform combustion of mixture in the combustion chamber S to produce a high output, a low fuel consumption, and improved exhaust gas property.

The center injection type also provides the advantage of reduction in the amount of fuel adhering to the cylinder wall 6 and resultant small amount of HC emission. This also improves the exhaust gas property.

Incidentally, since the in-cylinder injection engine 1 of this embodiment does not employ the stratified burning method, the top land of the piston may be formed either convex as shown in FIG. 1 or flat. This makes it easy to form the piston 7.

As shown in FIG. 3, since the injector 21 sheathed in the pipe member 25 and two ignition plugs 22 sheathed in pipe members 26 are disposed to face the water jacket 23, the injector 21 and the ignition plugs 22 are efficiently cooled with cooling water flowing through the water jacket 23.

FIG. 5 shows a shape of the combustion chamber S provided with a squish area. In FIG. 5 are also shown the cylinder head 2, the injector 21, and the ignition plugs 22.

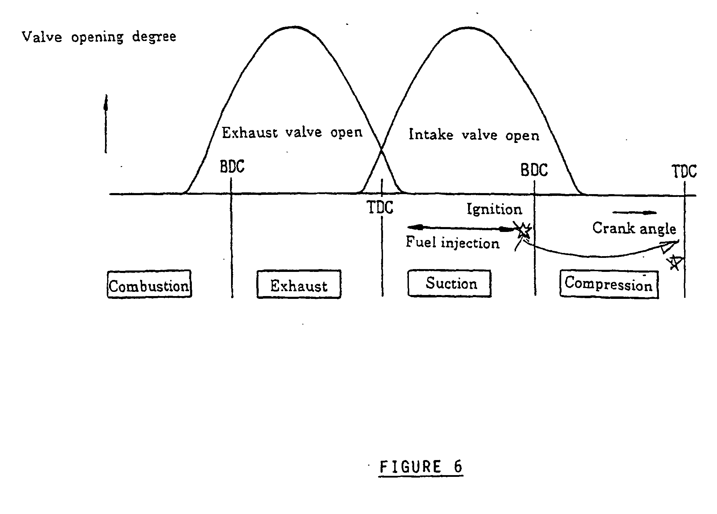

FIG. 6 shows the timing of fuel injection and ignition of the in-cylinder injection type of engine of this embodiment. In FIG. 6 the acronyms TDC and BDC stand for top dead center and bottom dead center, respectively.

While the above description is about the application of the invention specifically to a five-valve engine, it is a matter of course that the invention may be applied to any in-cylinder injection type of engine.

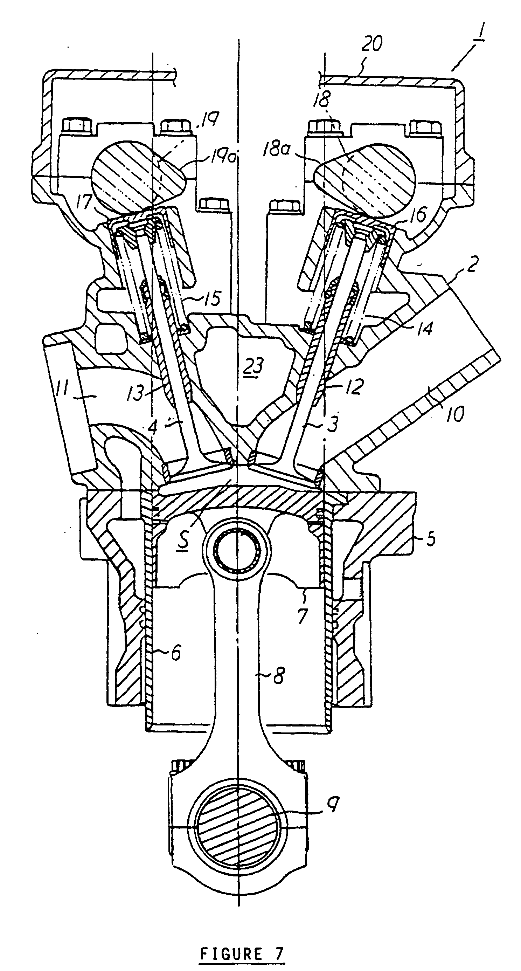

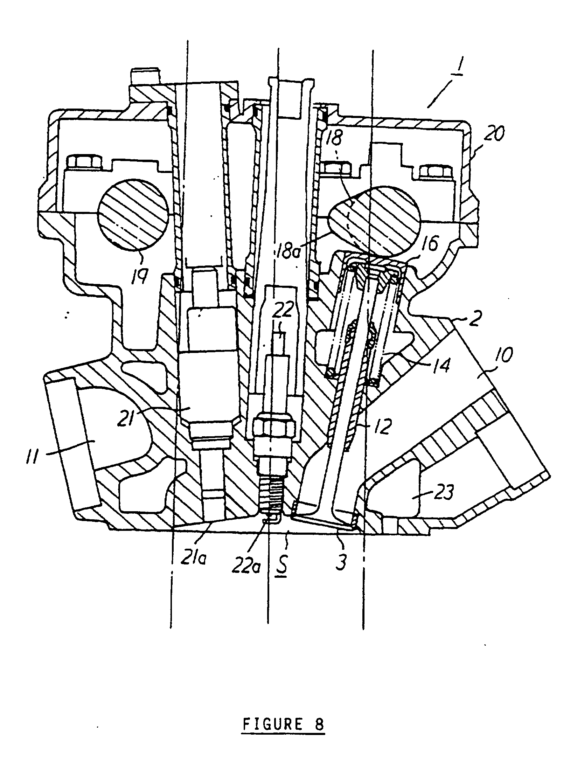

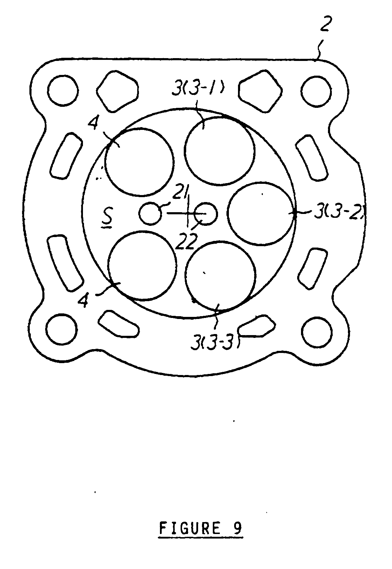

FIGs. 7 and 8 show the cylinder head, in vertical cross section, of the in-cylinder injection engine not falling under the scope of the present invention. FIG. 9 is a bottom view of the same cylinder head.

The in-cylinder injection engine is of the four-stroke cycle type with five valves, and its cylinder head 2 as shown in FIG. 9 has three intake valves 3 (3-1, 3-2, and 3-3), and two exhaust valves 4. Incidentally, the intake valve 3-2 of this embodiment in the center is made smaller in diameter than the other two (3-1 and 3-3) located on both sides thereof.

As shown in FIG. 7, the cylinder head 2 is placed over the cylinder block 5. The piston 7 for free up and down sliding is inserted in the cylinder 6 mounted in the cylinder block 5 and coupled through the connecting rod 8 to the crankshaft 9.

Intake passages 10 and exhaust passages 11 are formed in the cylinder head 2. The ends of the intake passages 10 and exhaust passages 11 opening into the combustion chamber S, namely intake ports and exhaust ports, are opened and closed by means of the intake and exhaust valves 3 and 4 with appropriate timing to perform necessary gas replacements in the combustion chamber S.

That is, the intake valves 3 and the exhaust valves 4 are inserted in and supported with respective valve guides 12 and 13 which are press-fitted into the cylinder head 2; urged toward closing position by means of valve springs 14 and 15; and contacted through valve lifters 16 and 17 with the intake cam 18a and the exhaust cam 19a.

The intake cam 18a and the exhaust cam 19a are respectively formed integrally with the intake camshaft 18 and the exhaust camshaft 19. As the intake camshaft 18 and the exhaust camshaft 19 are driven to rotate by part of the engine power, the intake valves 3 and the exhaust valves 4 are opened and closed with appropriate timing to perform necessary gas replacements in the combustion chamber S as described above.

The cylinder head 2 is covered with the head cover 20 from above. As shown in FIGs. 8 and 9, the injector 21 and the ignition plug 22 are disposed side by side along the intake-exhaust direction (right-left direction in FIGs. 7 and 9) around the bore center of the cylinder head 2 (around axially central area of each cylinder bore of the cylinder block 5). Around the injector 21 and the ignition plug 22 are disposed the intake valves 3 and the exhaust valves 4 (See FIG. 9). In this engine, the injector 21 is disposed on the exhaust side while the ignition plug 22 on the intake side. As shown in FIG. 8, the injector 21 and the ignition plug 22 are disposed with some inclination so that their mutual distance widens toward their outer ends. Incidentally, the reference numeral 23 in FIG. 7 denotes the water jacket for cooling water to flow through.

In this engine, an electrode portion 22a of the ignition plug 22 is located as shown in FIG. 8 at a higher position on the upper wall of the combustion chamber S than a fuel injection spout 21a of the injector 21.

In the above-described arrangement of the in-cylinder injection type of engine 1, fuel is directly injected from the injector 21 with appropriate timing toward the central area of the combustion chamber S and mixed with fresh air in the cylinder 6 to form mixture of a specified air-to-fuel ratio in the cylinder 6. The mixture is compressed in the cylinder 6 with the piston 7, then ignited with the ignition plug 22, and burned. Part of the heat produced as the mixture is burned is converted to mechanical power. Exhaust gas produced at the same time is discharged to the exhaust passages 11 as the exhaust valves 4 open in the exhaust stroke.

As described above, the in-cylinder injection engine 1 not falling under the scope of the present invention employs the so-called center injection type in which fuel is injected from the injector 21 to the central part of the combustion chamber S, and the electrode portion 22a of the ignition plug 22 is located at a higher position on the upper wall of the combustion chamber S than the fuel injection spout 2 la of the injector 21. Therefore, atomized fuel from the injector 21 is not directly sprayed over the electrode portion 22a of the ignition plug 22. This enables reliable, uniform combustion of mixture by means of the ignition plug 22, as well as high output, low fuel consumption, and improved exhaust gas property.

The center injection type also provides the advantage of reduction in the amount of fuel adhering to the wall of the cylinder 6 and resultant small amount of HC emission. This also improves the exhaust gas property.

Incidentally, since the in-cylinder injection engine 1 of this engine does not employ the stratified burning method, the top land of the piston can be formed either convex as shown in FIG. 7 or flat. This makes it easy to form the piston 7.

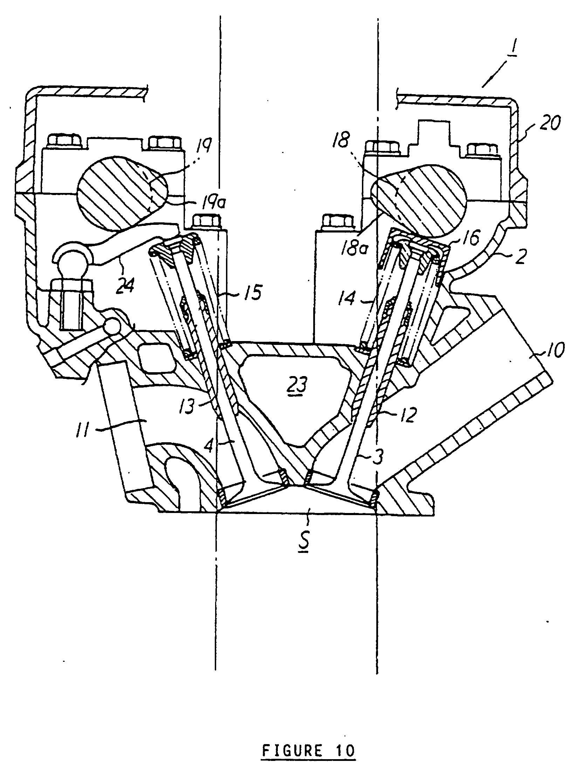

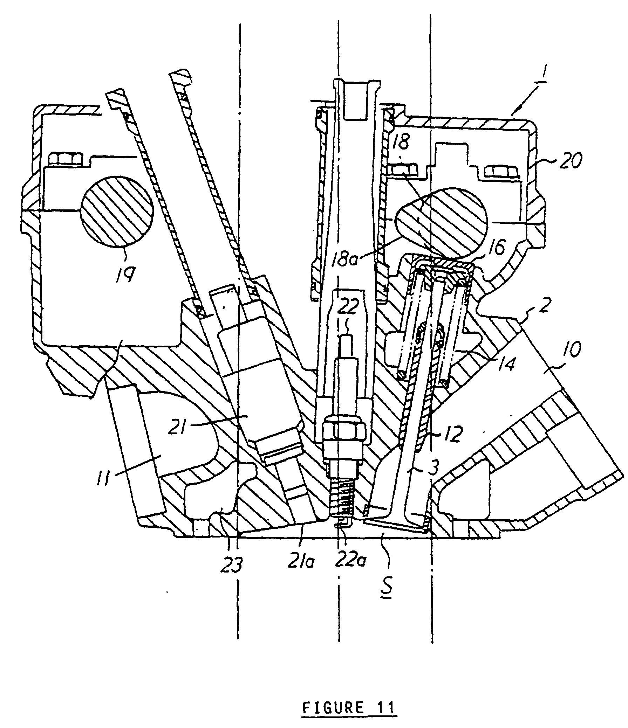

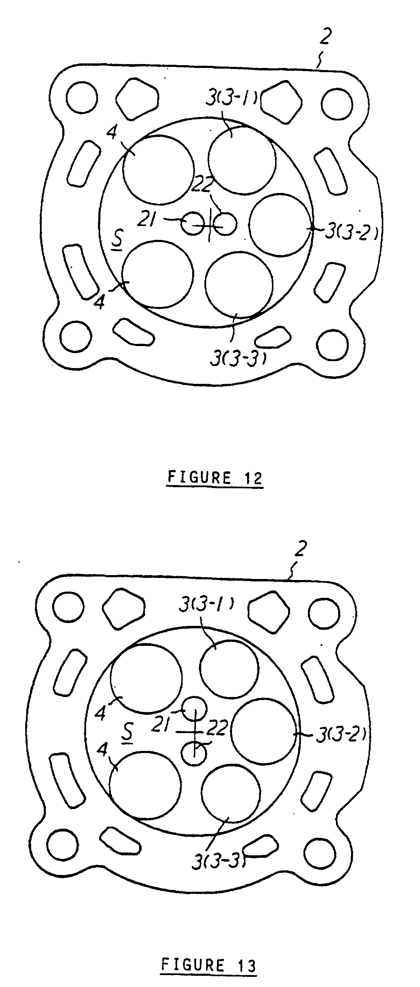

Next, another engine not falling under the scope of the present invention will be described in reference to FIGs. 10 to 12 due to an improved comprehension of the description. FIGs. 10 and 11 show the cylinder head, in vertical cross section, of the in-cylinder injection engine. FIG. 12 is a bottom view of the cylinder head. In these figures, the same elements as those shown in FIGs. 7 to 9 are provided with the same reference numerals and their descriptions are omitted.

As shown in FIG. 11, while the layout of the injector 21 and the ignition plug 22 in the in-cylinder injection engine 1 is the same as that of the embodiment as shown in FIGs. 7 and 8, the fuel injection spout 21 a of the injector 21 is located close to the electrode portion 22a of the ignition plug 22 by tilting the injector 21 largely toward the exhaust side (to the left in FIG. 11).

Tilting the injector 21 largely toward the exhaust side as described above makes it impossible because of shortage of space to employ a direct type of valve driving mechanism for the exhaust valves 4 (the type in which the exhaust valves 4 are directly driven with the exhaust cam 19a) as employed in the embodiment as shown in FIG. 7. Therefore, a rocker arm type is employed in this embodiment as shown in FIG. 10 in which the driving force of the exhaust camshaft 19 is transmitted through a rocker arm 24 to the exhaust valves 4.

In this engine, the so-called center injection type is also used for the fuel injection, and as shown in FIG. 11, the electrode portion 22a of the ignition plug 22 is located at a higher position on the upper wall of the combustion chamber S than the fuel injection spout 21 a of the injector 21. Therefore, the same effect as that with the engine as shown in FIG. 7 is provided.

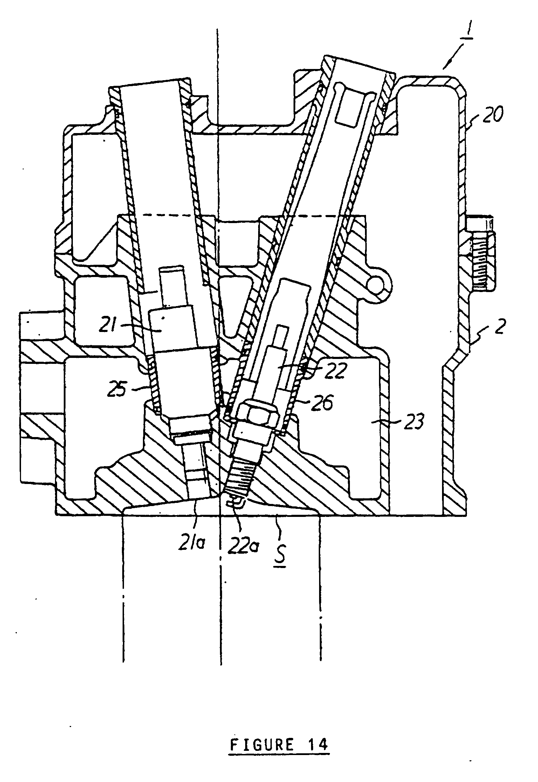

Next, a further engine not falling under the scope of the present invention will be described in reference to FIG. 13. FIG. 13 is a bottom view of the cylinder head of the in-cylinder injection engine. In the figure, the same elements as those shown in FIG. 9 are provided with the same reference numerals.

The configuration of this engine is the same as that of the engine as shown in FIG. 7 except for the layout direction of the injector 21 and the ignition plug 22.

That is, in this engine, the injector 21 and the ignition plug 22 are disposed side by side in the direction (upward and downward direction in FIG. 13) at right angles to the intake-exhaust direction (right and left direction in FIG. 13), and the intake valves 3-1 and 3-3 on both sides are made smaller in diameter than the central intake valve 3-2.

Also in this engine, the so-called center injection type is employed for the fuel injection and, although not shown, the electrode portion of the ignition plug 22 is located at a higher position on the upper wall of the combustion chamber S than the fuel injection spout of the injector 21. Therefore, the same effect as that with the previously described engine as shown in FIG. 7 is provided.

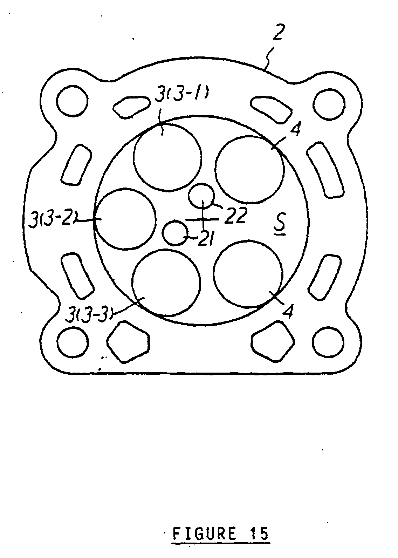

Next, a further embodiment of the invention will be described in reference to FIGs. 14 and 15. FIG. 14 shows a cylinder head in vertical cross section of the in-cylinder injection engine of this embodiment. FIG. 15 is a bottom view of the cylinder head. In these figures, the same elements as those shown in FIGs. 7 to 9 are provided with the same reference numerals and their descriptions are omitted.

In this embodiment as shown in FIG. 15 the injector 21 and the ignition plug 22 are disposed side by side obliquely with displacements toward intake and exhaust sides, with the injector 21 on the intake side of a lower temperature while the ignition plug 22 on the exhaust side. Disposing the injector 21 on the low temperature, intake side in this way prevents carbon from depositing around the fuel injection spout 2 la of the injector 21 and enables to maintain accurate fuel injection rate.

As shown in FIG. 14 the injector 21 and the ignition plug 22 are respectively sheathed in pipe members 25 and 26 and disposed to face the water jacket 23.

In this embodiment, the fuel injection is also of the so-called center injection type, and the electrode portion 22a of the ignition plug 22 is located at a higher position on the upper wall of the combustion chamber & than the fuel injection spout of the injector 21. Therefore, the same effect as that with the first embodiment is provided. Further effects are provided, that is, since the injector 21 and the ignition plug 22 are disposed side by side obliquely with displacements toward intake and exhaust sides, all the intake valves 3 (3-1, 3-2, and 3-3) can be made of the same diameter. And, since the injector 21 and the ignition plug 22 are respectively sheathed in pipe members 25 and 26 and disposed to face the water jacket 23, the injector 21 and the ignition plug 22 are effectively cooled with the water flowing through the water jacket 23.

Incidentally, while the injector 21 is disposed on the intake side of a lower temperature and the ignition plug 22 on the exhaust side, it is also possible to dispose inversely, with the injector 21 on the exhaust side and the ignition plug on the intake side of a lower temperature. Such an arrangement with the ignition plug on the intake side of a lower temperature makes it possible to effectively prevent knocking from occurring.

While the above description is about the application of the invention specifically to a five-valve engine, it is a matter of course that the invention may be applied to any in-cylinder injection type of engine.

As is clear from the above description, this invention employs the center injection type in which fuel is injected from the injector to the central part of the combustion chamber, and mixture is ignited and burned by means of the two ignition plugs disposed in the camshaft direction. This enables reliable, uniform combustion of mixture in the combustion chamber to produce a high output, a low fuel consumption, and improved exhaust gas property.

As is clear from the above description, this embodiment employs the center injection type in which fuel is injected from the injector to the central part of the combustion chamber, and the electrode portion of the ignition plug is located at a higher position on the upper wall of the combustion chamber than the fuel injection spout of the injector. Therefore, atomized fuel from the injector is not directly sprayed over the electrode portion of the ignition plug, and the mixture is ignited with the ignition plug and burned reliably and uniformly to provide high output, low fuel consumption, and improved exhaust gas property.

## Claims

1. Internal combustion engine (1) of an in-cylinder injection type with at least one injector (21) and at least one ignition plug (22), wherein the injector (21) and/or at least one of the ignition plugs (22) are disposed in a bore center area of a cylinder (6), whereas said injector (21) and said one ignition plug (22) are arranged side by side,
**characterized in that** the injector (21) and the ignition plug (22) are disposed obliquely with displacements toward intake and exhaust sides, with the injector (21) on the intake side and the ignition plug (22) on the exhaust side.

2. Internal combustion engine according to claim 1, **characterized in that** said injector or injectors (21) are arranged such that an electrode area (22a) of said ignition plug or ignition plugs (22) are free of a direct fuel spray.

3. Internal combustion engine according to claim 1 or 2, **characterized in that** the injector (21) is disposed in the bore center area of each cylinder (6), and that two ignition plugs (22) are disposed in a camshaft direction on both sides of the injector (21).

4. Internal combustion engine according to at least one of the preceding claims 1 to 3, **characterized in that** the ignition plug (22) is attached tilted toward a camshaft (18, 19) and relative to a cylinder axis.

5. Internal combustion engine according to at least one of the preceding claims 1 to 4, **characterized in that** a cylinder head (2) is provided with three intake valves (3) and two exhaust valves (4).

6. Internal combustion engine according to claim 1, **characterized in that** the injector (21) and the ignition plug (22) are disposed side by side in the central area of each cylinder bore, and an electrode portion (22a) of the ignition plug (22) is located at a higher position on an upper wall of a combustion chamber (S) than a fuel injection spout (21 a) of the injector (21).

7. Internal combustion engine according to claim 6, **characterized in that** the injector (21) and the ignition plug (22) are disposed side by side generally at right angles to a camshaft (18, 19), and that at least one of a valve driving mechanisms for an intake (3) and an exhaust valves (4), respectively, is made of a rocker arm type (24).

8. Internal combustion engine according to at least one of the preceding claims 5 to 7, **characterized in that** at least one of the intake valves (3) is made smaller in diameter than other intake valves (3) depending on the direction of the side by side disposition of the injector (21) and the ignition plug (22).

9. Internal combustion engine according to at least one of the preceding claims 1 to 8, **characterized in that** a top land of a piston (7) is made flat or convex.

10. Internal combustion engine according to at least one of the preceding claims 1 to 9, **characterized in that** the injector (21) and the ignition plug (22) are respectively sheathed in pipe members (25,26) and disposed to face a water jacket (23).

## Patentansprüche

1. Brennkraftmaschine (1) eines In- Zylinder- Einspritztyps mit zumindest einem Einspritzer (21) und zumindest einer Zündkerze (22), wobei der Einspritzer (21) und / oder zumindest eine der Zündkerzen (22) in einer Bohrungsmittenbereich eines Zylinders (6) angeordnet sind, während der Einspritzer (21) und eine Zündkerze (22) nebeneinander angeordnet sind,
**dadurch gekennzeichnet, dass** der Einspritzer (21) und die Zündkerze (22) schräg mit Verlagerungen in die Richtung zu den Einlass- und Auslassseiten angeordnet sind, mit dem Einspritzer (21) an der Einlassseite und der Zündkerze (22) an der Auslaßseite.

2. Brennkraftmaschine nach Anspruch 1, **dadurch gekennzeichnet, dass** der Einspritzer oder die Einspritzer (21) derart angeordnet sind, dass ein Elektrodenbereich (22a) der Zündkerze oder der Zündkerzen (22) frei von einem direkten Kraftstoffeinsprühnebel sind.

3. Brennkraftmaschine nach Anspruch 1 oder 2, **dadurch gekennzeichnet, dass** der Einspritzer (21) in dem Bohrungsmittenbereich jedes Zylinders (6) angeordnet ist und dass zwei Zündkerzen (22) in einer Nockenwellenrichtung auf beiden Seiten des Einspritzers (21) angeordnet sind.

4. Brennkraftmaschine nach zumindest einem der vorhergehenden Ansprüche 1 bis 3, **dadurch gekennzeichnet, dass** die Zündkerze (22) in Richtung einer Nockenwelle (18, 199 und relativ zu einer Zylinderachse geneigt angeordnet ist.

5. Brennkraftmaschine nach zumindest einem der vorhergehenden Ansprüche 1 bis 4, **dadurch gekennzeichnet, dass** ein Zylinderkopf (2) mit drei Einlassventifen (3) und zwei Auslassventilen (4) versehen ist.

6. Brennkraftmaschine nach Anspruch 1, **dadurch gekennzeichnet, dass** der Einspritzer (21) und die Zündkerze (22) nebeneinander in dem Mittelbereich jeder Zylinderbohrung angeordnet sind, und ein Elektrodenabschnitt (22a) der Zündkerze (22) auf einer höheren Position an einer oberen Wand einer Brennkammer (S) als eine Kraftstoffeinspritzausfass (21a) des Einspritzers (21) angeordnet ist.

7. Brennkraftmaschine nach Anspruch 6, **dadurch gekennzeichnet, dass** der Einspritzer (21) und die Zündkerze (22) nebeneinander im Wesentlichen in rechten Winkeln zu einer Nockenwelle (18, 19) angeordnet sind und dass zumindest jeweils eine von Ventilantriebsvorrichtungen für ein Einlass- (3) und ein Auslassventil (4) vom Kipphebel-Typ (24) ist.

8. Brennkraftmaschine nach zumindest einem der vorhergehenden Ansprüche 5 bis 7, **dadurch gekennzeichnet, dass** zumindest eines der Einlassventile (3) im Durchmesser kleiner als die anderen Einlassventile (3) in Abhängigkeit von der Richtung der Nebeneinanderanordnung des Einspritzers (21) und der Zündkerze (22) gemacht ist.

9. Brennkraftmaschine nach zumindest einem der vorhergehenden Ansprüche 1 bis 8, **dadurch gekennzeichnet, dass** ein Spitzenboden eines Kolbens (7) flach oder konvex gestaltet ist.

10. Brennkraftmaschine nach zumindest einem der vorhergehenden Ansprüche 1 bis 9, **dadurch gekennzeichnet, dass** der Einspritzer (21) und die Zündkerze (22) jeweils in Rohrteilen (25, 26) ummantelt und angeordnet sind, um einem Wassermantel (23) zugewandt zu sein.

## Revendications

1. Moteur à combustion interne (1) de type à injection dans des cylindres comportant au moins un i n-jecteur (21) et au moins une bougie d'allumage (22), dans lequel l'injecteur (21) et/ou au moins une des bougies d'allumage (22) sont disposés dans une zone centrale d'alésage d'un cylindre (6), alors que ledit injecteur (21) et ladite bougie d'allumage (22) sont agencés côte à côte,
**caractérisé en ce que** l'injecteur (21) et la bougie d'allumage (22) sont disposés en oblique en ayant des déplacements en direction des côtés admission et échappement, l'injecteur (21) étant situé du côté admission et la bougie d'allumage (22) du côté échappement.

2. Moteur à combustion interne selon la r e-vendication 1, **caractérisé en ce que** ledit injecteur ou lesdits injecteurs (21) sont agencés de sorte qu'une surface d'électrode (22a) de ladite bougie d'allumage ou desdites bougies d'allumage (22) est exempte d'une aspersion directe de carburant.

3. Moteur à combustion interne selon la r e-vendication 1 ou 2, **caractérisé en ce que** l'injecteur (21) est disposé dans la zone centrale d'alésage de chaque cylindre (6), et que deux bougies d'allumage (22) sont disposées dans une direction d'arbre à cames des deux côtés de l'injecteur (21).

4. Moteur à combustion interne selon au moins une des revendications précédentes 1 à 3, **caractérisé en ce que** la bougie d'injection (22) est fixée inclinée en direction d'un arbre à cames (18, 19) et par rapport à un axe de cylindre.

5. Moteur à combustion interne selon au moins une des revendications précédentes 1 à 4, **caractérisé en ce qu'**une culasse (2) comporte trois soupapes d'a d-mission (3) et deux soupapes d'échappement (4).

6. Moteur à combustion interne selon la r e-vendication 1, **caractérisé en ce que** l'injecteur (21) et la bougie d'allumage (22) sont disposés côte à côte dans la zone centrale de chaque alésage de cylindre, et une partie d'électrode (22a) de la bougie d'allumage (22) est située dans une position plus haute sur une paroi supérieure d'une chambre de combustion (S) qu'un canal d'injection de carburant (21a) de l'injecteur (21).

7. Moteur à combustion interne selon la r e-vendication 6, **caractérisé en ce que** l'injecteur (21) et la bougie d'allumage (22) sont disposés côte à côte généralement à angles droits par rapport à un arbre à cames (18, 19), et qu'au moins un des mécanismes d'e n-traînement de soupape pour une soupape d'admission (3) et une soupape d'échappement (4), respectivement, est de type culbuteur (24).

8. Moteur à combustion interne selon au moins une des revendications précédentes 5 à 7, **caractérisé en ce qu'**au moins une des soupapes d'admission (3) est fabriquée plus petite en diamètre que les autres soupapes d'admission (3) en fonction de la direction de la disposition côte à côte de l'injecteur (21) et de la bougie d'allumage (22).

9. Moteur à combustion interne selon au moins une des revendications précédentes 1 à 8, **caractérisé en ce qu'**une couronne d'un piston (7) est fabriquée plate ou convexe.

10. Moteur à combustion interne selon au moins une des revendications précédentes 1 à 9, cara c-térisé en ce que l'injecteur (21) et la bougie d'all u-mage (22) sont respectivement enveloppés dans des éléments de tube (25, 26) et disposés pour faire face à une chemise d'eau (23).
